Europäisches Patentamt

European Patent Office

Office européen des brevets

(11) Numéro de publication: **0 383 370 B1**

# FASCICULE DE BREVET EUROPEEN

(45) Date de publication de fascicule du brevet: **26.07.95** (51) Int. Cl.⁶: **B23H 7/04**

(21) Numéro de dépôt: **90200082.7**

(22) Date de dépôt: **12.01.90**

(54) **Dispositif et procédé de contrôle pour découper par électroérosion en évitant la rupture du fil.**

(30) Priorité: **13.01.89 CH 100/89**

(43) Date de publication de la demande:
**22.08.90 Bulletin 90/34**

(45) Mention de la délivrance du brevet:
**26.07.95 Bulletin 95/30**

(84) Etats contractants désignés:
**DE ES FR GB IT SE**

(56) Documents cités:
**EP-A- 0 276 195**

(73) Titulaire: **CHARMILLES TECHNOLOGIES S.A.
8-10, rue du Pré-de-la-Fontaine
CH-1217 Meyrin 1 (CH)**

(72) Inventeur: **Reynier, Alain
La Clé des Champs, Moens
F-01210 Ferney Voltaire (FR)**
Inventeur: **Martin, Roland
Dingy en Vuache, Biloux
F-74520 Valleiry (FR)**
Inventeur: **Crivelli, Lorenzo
4, chemin de Poussy
CH-1214 Vernier-Ge (CH)**
Inventeur: **Gazzetta, Ivano
7, av. du Devin-du-Village
CH-1203 Genève (CH)**

(74) Mandataire: **Hugelin, Christiane
c/o CHARMILLES TECHNOLOGIES SA
Case postale 373
CH-1217 Meyrin 1 (CH)**

# EP 0 383 370 B1

## Description

La présente invention a trait à un dispositif et à un procédé de contrôle d'une machine d'électroérosion pour découper avec un fil-électrode faisant appel à la modification automatique, à certains moments de l'usinage, d'au moins un paramètre d'usinage, en particulier afin d'éviter la rupture du fil, et ceci sans devoir arrêter l'usinage.

Divers procédés ont été proposés dans l'état de la technique pour contrôler l'usinage par électroérosion en régulant automatiquement certains paramètres d'usinage, telle la vitesse, en particulier afin d'éviter une dégradation de l'usinage qui pourrait provoquer la rupture du fil électrode ou l'apparition de courts-circuits qui auraient eux aussi pour résultat la rupture du fil.

Il est connu de déterminer, grâce à un contrôle adaptatif par exemple, les valeurs des conditions d'usinage (tension d'usinage, fréquence des impulsions provoquant les décharges, etc ) idéales permettant de découper une pièce donnée à la vitesse optimum tout en évitant la rupture du fil. Pour celà on mesure en continu , par exemple la tension et le courant d'usinage, et on calcule en temps réel à partir d'équations établies d'après un modèle théorique, des grandeurs faisant intervenir la moyenne du courant et de la tension d'usinage sur un grand nombre de mesures. Elles permettent de prévoir l'apparition du risque de rupture et de piloter en continu une modification automatique des conditions d'usinage, programmée de manière à maintenir ces valeurs dans certaines limites.

Le but de la présente invention est la régulation automatique d'au moins un paramètre d'usinage grâce à une stratégie de protection . On désire éviter la rupture du fil en faisant varier graduellement, en réponse à l'évolution d'au moins une grandeur appropriée, un ou plusieurs paramètres, telles la fréquence des impulsions, ou l'intensité, la tension, la durée ou la tension d'amorçage des décharges, la pression d'injection, la tension mécanique ou la vitesse de déroulement du fil, l'avance du servomécanisme. On désire aussi que cette variation soit réalisée par paliers, le plus rapidement possible, afin de ne pas affecter la vitesse de l'usinage, tout en augmentant sa sécurité, son automatisme, et en évitant les pertes de temps dûes au réenfilage du fil suite à une rupture de ce dernier. Une telle stratégie doit pouvoir être utilisée en particulier pour réduire le régime d'usinage lorsqu'il y a risque de courts-circuits ou lorsqu'apparait un risque de rupture du fil suite à une dégradation de l'usinage, et pour rétablir le régime initial lorsque ce risque a disparu.

La présente invention a trait à une machine d'électroérosion permettant de mettre en oeuvre une telle stratégie selon laquelle la durée des paliers de variation des paramètres est assujetie à l'évolution de facteurs donnant une image des conditions régnant dans la fente usinée dans la pièce par le fil. L'un de ces facteurs peut être la grandeur mentionnée ci-dessus, qui déclenche la mise en route de cette stratégie en dépassant une limite prédéterminée. Elle a trait aussi à des procédés d'usinage qui font appel à cette stratégie.

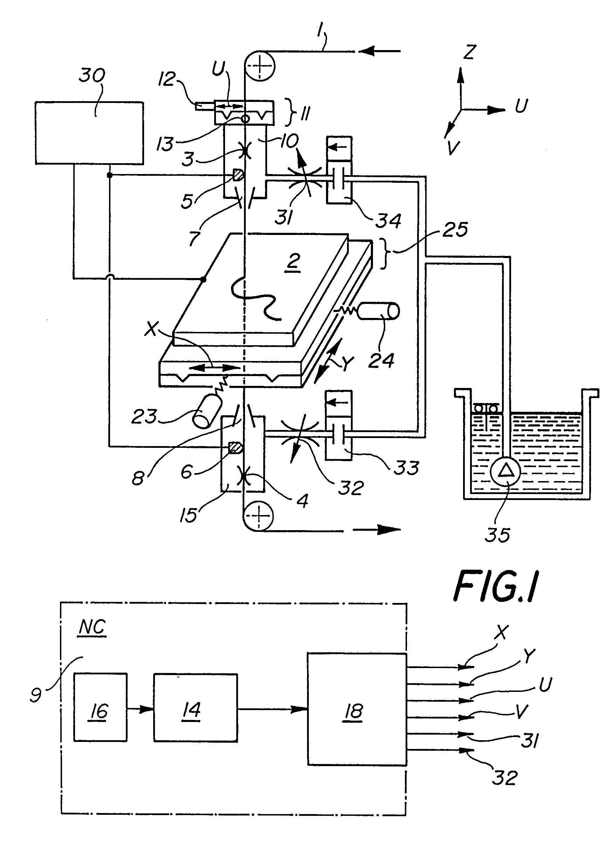

Rappelons brièvement le fonctionnement d'une machine à découper par électroérosion avec un fil-électrode, telle par exemple que celle illustrée à la figure 1 (voir p.ex. EP-A-276 195) :

- un fil-électrode 1 défile en continu entre deux guides-fil 3 et 4 disposés de part et d'autre de la pièce 2 à usiner, grâce à des mécanismes (non représentés) entraînant le fil tout en le freinant de manière à lui donner une tension mécanique prédéterminée. Deux contacts frottants 5 et 6 amènent au fil-électrode le courant d'usinage émis par un générateur d'impulsions 30, tandis que deux buses d'injection 7 et 8 dirigent des jets de liquide d'usinage le long du fil 1 et dans la fente découpée dans la pièce 2 par ce dernier.

- Le guide-fil 3, la buse 7, et le contact 5 supérieurs sont disposés dans une tête d'usinage 10 mobile selon l'axe vertical Z, et en général, mobile également (selon des courses relativement petites) dans un plan horizontal, selon deux axes orthogonaux U et V, ce qui permet d'incliner le fil, le guide-fil inférieur 4 restant fixe. Ce mouvement (U, V) est réalisé grâce à une table à mouvements croisés 11, actionnée par un servo-mécanisme (de type connu, non représenté) comportant les deux moteurs 12 et 13. La tête d'usinage inférieure 15 contenant le guide-fil 4, la buse 8 et le contact 6 inférieurs, reste fixe par rapport au bâti de la machine.

- La pièce 2 à usiner est fixée grâce à un mécanisme non représenté sur une table fixée elle-même sur le fond d'un bac de travail (non représenté) rempli de liquide d'usinage. Ce dernier est mobile selon deux axes horizontaux et orthogonaux X et Y grâce à une table à mouvements croisés 25, actionnée par un servo-mécanisme (de type connu, non représenté) comportant les deux moteurs 23 et 24.

- La trajectoire de découpe est mémorisée sur un support d'information 16 qui transmet ses données à l'unité de calcul 14 d'une commande numérique 9. Cette dernière comporte également une unité programmée de façon appropriée, au moins une mémoire et un lecteur, ainsi qu'une installation 18 (processeur ou interpolateur) contrôlant et commandant les déplacements relatifs entre la pièce-

2

électrode 2 et le fil-électrode 1 en actionnant les moteurs 12, 13, 23 et 24, et contrôlant d'autres paramètres d'usinage, telle la pression d'injection du liquide d'usinage en agissant sur les électrovannes 31 et 32. L'unité de calcul 14 évalue la trajectoire de découpe et transmet des signaux de commande à l'interpolateur 18 destiné à répartir les déplacements suivant les deux directions X et Y actionnés par les deux moteurs 23 et 24.

- Le générateur d'impulsions 30 est connecté entre les deux électrodes 1 et 2 de manière à émettre des impulsions de tension successives destinées à amorcer des décharges dans la zone d'usinage. Il reçoit des signaux de la commande numérique 9 (liaison non représentée) pour commander, par exemple, une variation de valeur donnée de la fréquence des impulsions, ou de la tension ou de la durée des étincelles.

- Un réservoir de liquide diélectrique alimente le bac de travail et les circuits d'injection vers les buses 7 et 8 des têtes d'usinage. Ces derniers sont schématisés à la figure 1 par la pompe 35 et les électro-vannes 31 et 32 reliées aux distributeurs de liquide 33 et 34.

Le contrôle du régime d'usinage selon la présente invention est réalisé de la façon suivante :

- on suit l'évolution d'au moins un premier facteur (par exemple une tension d'usinage intégrée fournie par une unité de la commande numérique de la machine, ou le taux d'étincelles sans attente) dont la variation au-delà d'un seuil donné est l'indice d'une dégradation de l'usinage;

- dès que ce premier facteur atteint ce seuil critique de référence, on fait varier la valeur V du ou des paramètre(s) à modifier , par exemple la fréquence des impulsions émises par le générateur ou la pression d'injection, d'une première quantité Q donnée, cette modication étant par exemple une diminution;

- cette variation peut provoquer une variation de ce premier facteur suite à une évolution des conditions de l'usinage; tant que la valeur de ce premier facteur reste au-delà du seuil critique, on continue à diminuer le(s) paramètre(s), par paliers, de quantités $Q_x$ données, ceci jusqu'à réduire ce(s) paramètre(s) à la valeur prévue V', ou jusqu'à ce que le premier facteur soit revenu en-deçà du seuil critique (le paramètre n'ayant atteint que la valeur V(x)); la durée de ces paliers est asservie à l'évolution d'un facteur témoin. Signalons que lorsque le paramètre modifié est un facteur de la puissance des décharges, sa réduction entraîne une variation de la vitesse d'avance, réalisée automatiquement par les servo-mécanismes actionnant le mouvement relatif;

- on usine éventuellement pendant un certain temps à régime réduit en maintenant le paramètre à la valeur obtenue suite à ces variations successives ( V' ou V(x) );

- lorsque l'évolution du premier facteur indique, en repassant un seuil critique , la diminution du risque de rupture et une amélioration de l'usinage, on modifie le ou les paramètre(s) en sens inverse, en procédant à nouveau par paliers et en asservissant la durée de ces paliers à l'évolution d'un facteur témoin, comme décrit ci-dessus, afin de rétablir le régime d'usinage initial. S'il s'agit par exemple d'une augmentation, on augmente la valeur du paramètre d'une quantité Q';

- ceci peut provoquer une variation du premier facteur suite à une évolution des conditions de l'usinage; tant que la valeur de ce premier facteur reste en-deçà du seuil critique , on continue à augmenter le(s) paramètre(s), par paliers, de quantités $Q'_x$ données;

- lorsque le paramètre a de nouveau la valeur V, on poursuit l'usinage avec le régime de départ.

Ces suites d'augmentations et de diminutions successives de paramètre ne sont pas programmées. C'est l'évolution du facteur témoin qui indique la fin de chaque palier et celle du premier facteur si le paramètre doit être augmenté ou diminué d'une quantité prévue.

On peut prévoir deux seuils de référence encadrant une zone critique; tant que le premier facteur évolue dans cette zone, on maintient le paramètre à sa valeur actuelle.

On a procédé ainsi à des variations progressives par paliers, dont les durées sont en général variables d'un palier au palier suivant et sont déterminées par le temps pris par le facteur témoin pour varier en réponse à chacune des modifications élémentaires imposées au(x) paramètre(s).

Les quantités Q, $Q_x$, Q', $Q'_x$ peuvent être égales ou différentes pour chacun des décréments et incréments (variations élémentaires) réalisés. Ces quantités peuvent être suffisamment faibles (et les paliers suffisamment nombreux) pour que la variation soit graduelle et pratiquement continue.

La grandeur dont l'évolution au-delà d'une certaine limite déclenche la stratégie de protection décrite ci-dessus peut être en même temps le facteur ou l'un des facteurs dont l'évolution sert à asservir la durée des paliers de variation.

L'objet de la présente invention est donc un dispositif tel que défini à la revendication 1.

C'est également un procédé de commande (ou de contrôle) d'une machine à découper par électroérosion tel que défini à la revendication 7.

Ce procédé permet de faire, soit diminuer, soit augmenter un paramètre afin de rétablir de bonnes conditions d'usinage, c'est-à-dire d'usinage sans risque de rupture, puis de le faire, soit augmenter, soit diminuer afin de le ramener à sa valeur initiale, le danger ayant disparu.

Le paramètre que l'on fait varier pour arrêter la dégradation des conditions de l'usinage est en général l'un des facteurs du régime d'usinage, en particulier de la puissance des impulsions émises par le générateur, telle la fréquence de ces impulsions, l'intensité du courant d'usinage, le temps d'étincelle ou la tension d'étincelle.

Sa variation peut s'accompagner de celle d'un ou de plusieurs autres paramètres, par exemple d'une variation de la pression d'injection du liquide ou/et de la tension mécanique du fil ou/et de la vitesse de défilement de ce dernier. Ceci permet en particulier de renforcer l'action de la diminution de fréquence des impulsions sur la flèche du fil.

Le facteur donnant une image des conditions de l'usinage est, par exemple, la tension moyenne d'usinage, la tension d'asservissement (différence entre la tension moyenne de référence et la tension moyenne d'usinage), ou la durée moyenne du délai d'amorçage des décharges, ou le taux d'étincelles sans attente. On peut aussi surveiller l'évolution de la résistance du fil, par exemple grâce au dispositif décrit dans CH 620.851, ou celle de la dégradation mécanique du fil, par exemple grâce à l'un des dispositifs décrits dans EP 276.195, ou encore celle de la conductivité du gap, une diminution de cette dernière pouvant être l'indice de l'apparition de bulles de gaz et donc de la dégradation de l'usinage.

Les quantités dont on fait varier le(s) paramètre(s) à chaque palier ainsi que le nombre de ces paliers, la valeur V' finale atteinte par le(s) paramètre(s), ou le(s) seuil(s) critique(s) atteint(s) par le(s) facteur(s) d'asservissement (facteurs témoins) et ceux indices d'un certain état de dégradation de l'usinage et donnant le signal de la mise en oeuvre de la stratégie de protection (premier facteur) ont été, par exemple, prédéterminés expérimentalement en choisissant les valeurs permettant d'éviter les courts-circuits et la rupture du fil tout en modifiant le régime aussi peu et aussi rapidement que possible . Ces valeurs peuvent être mémorisées par exemple sur un élément approprié du support d'information relié à l'unité de calcul de la commande numérique de la machine EDM. Elles sont par exemple fonction du couple matériau et/ou hauteur de la pièce/matériau et/ou géométrie du fil-électrode.

Les stratégies de protection décrites dans la présente invention peuvent aussi être utilisées pour faire varier un paramètre lorsque l'usinage exige une modification du régime, par exemple lors de la découpe selon une trajectoire courbe ou dans une pièce d'épaisseur variable.

L'invention sera illustrée ci-dessous par quelques unes des nombreuses réalisations possibles, décrites uniquement à titre d'exemple, mais sans être limitée à celles-ci.

Dans les exemples choisis, on surveille simultanément deux facteurs indiquant l'état des conditions d'usinage :

- la tension moyenne d'asservissement Usai et
- le taux d'étincelles sans attente TL.

On peut activer ou désactiver la surveillance de l'un de ces facteurs. On peut aussi les remplacer par un autre facteur relié à ce taux ou à cette tension moyenne. Par exemple, le premier peut être utilisé pour déclencher la protection, le second pour commander la durée des paliers de variation du paramètre.

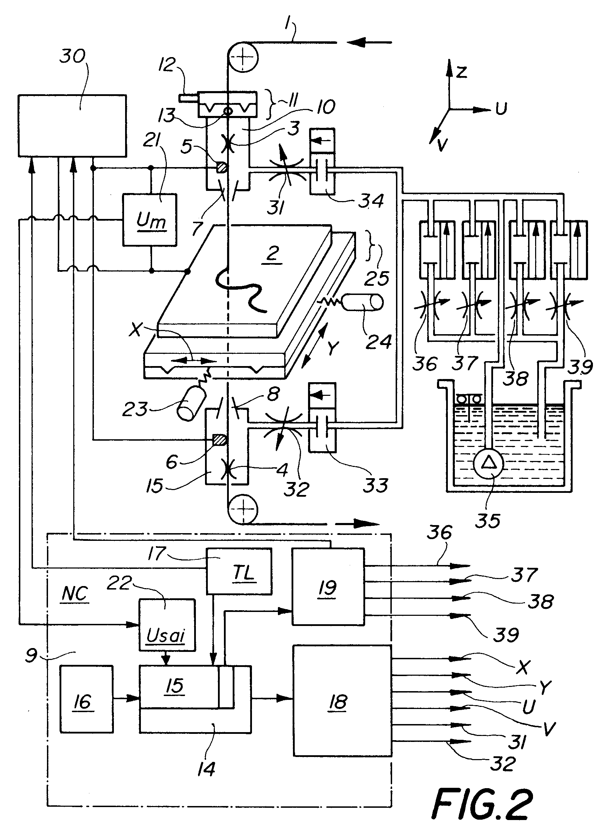

On détermine Usa en mesurant en continu la tension d'usinage Um, grâce à un circuit de mesure de type connu, tel que celui décrit dans le brevet CH 654.233. Grâce à un deuxième circuit on détermine sa moyenne $\overline{Um}$ et on la compare à la valeur $\overline{Umr}$ de cette moyenne obtenue en régime nominal en calculant le signal d'erreur Usa = $\overline{Um}$ -$\overline{Umr}$. La valeur Usai est obtenue en intégrant Usa sur le train des mesures successives effectuées pendant les quatre-vingts millisecondes précédentes, grâce à l'élément 22 schématisé à la figure 2.

Le taux TL est le nombre d'étincelles sans attente observées pendant un temps donné, ou pour un certain nombre d'impulsions successives, le générateur 30 étant réglé sur un temps de pause donné entre deux impulsions.

Ces facteurs présentent plusieurs valeurs ou seuils de référence déterminés expérimentalement :

- pour Usai :
     Usa B (Usa "bas")
     Usa N (Usa "normal")
     Usa H (Usa "haut")
     Usa HO (Usa "hors pièces")
- pour TL :
     TL H (TL de référence)
     TL B (TL "bon")
     TL M (TL "mauvais")

On agit sur deux paramètres : la fréquence f des impulsions et la pression d'injection p.

On a déterminé expérimentalement que les courts-circuits sont évités pour une fréquence réduite F(x) ≧F/4, et pour une pression réduite P(x) = P/4, F et P étant la fréquence des impulsions et la pression d'injection du régime d'usinage nominal, c'est-à-dire du régime utilisé avant la dégradation de l'usinage.

Exemple 1 - RECUL DU FIL

Un recul du fil peut se produire lorsque le fil débouche dans un trou de petit diamètre, le liquide sous pression dans le trou s'évacuant par la fente en entraînant le fil. Si aucune action n'est entreprise, le recul s'accentue et peut entraîner un court-circuit contre une face usinée, voire même faire sortir le fil de la fente. Ceci se traduit par une augmentation de Usai telle que Usai≧ Usa H. Dès que Usai atteint ce seuil, un signal déclenche la protection, c'est-à-dire commande une première diminution de f et p. Ces diminutions ont en particulier pour effet de réduire ou même de supprimer la flèche.

Cette première diminution $Q_1$ de la fréquence f et $Q_2$ de la pression p, est telle que

$$Q_1 = \frac{F - F/4}{8} \quad et \quad Q_2 = \frac{P - P/4}{8} \; .$$

Le contrôle de la pression est effectué par une batterie de quatre électrovannes 36 à 39 montées en parallèle sur le by-pass de la pompe haute-pression 35 amenant le liquide d'usinage depuis un réservoir jusqu'au réseau de distribution vers les buses d'injection 7 et 8 et le bac de travail (voir figure 2). Si après un certain laps de temps Usai n'est toujours pas inférieure à Usa H, on procède à une nouvelle diminution $Q_1$ et $Q_2$ de la fréquence f et de la pression p, et ainsi de suite jusqu'à ce que f = F/4 et p = P/4.

Exemple 2 - BORD DE PIECE ET SORTIE DE PIECE

Lorsque l'orifice de sortie de la buse approche du bord de la pièce, la pression du jet de liquide émit par cet orifice diminue, ce qui entraîne une mauvaise irrigation de la fente usinée. Les conditions d'usinage se dégradent d'où une augmentation très nette du taux d'étincelle sans attente TL. Dès que TL atteint le seuil de référence TLH, un signal déclenche une diminution de la fréquence f et éventuellement une augmentation de la pression p. Ce signal est émis par le compteur 17 schématisé à la figure 2. Dans cet exemple également, cette diminution a la valeur $Q_1$ définie ci-dessus. On prévoit aussi de réduire f à la valeur F/4, F étant la fréquence nominale, c'est-à-dire correspondant à un usinage non-dégradé, comme définie ci-dessus. On procède par paliers comme expliqué à l'exemple 1, jusqu'à ce qu'on observe que TL < TLH ou jusqu'à ce que f = F/4.

On usine à régime réduit soit jusqu'à ce que le fil ait atteint le bord de la pièce, soit jusqu'à ce que le fil se soit dirigé à nouveau vers le centre de la pièce, selon la trajectoire prévue:
- dans le cas de la sortie de la pièce, Usai augmente et on réagit comme à l'exemple 1, pour autant que la fréquence n'ait pas déjà atteint la valeur finale F/4 et sauf que la valeur de référence de Usai qui déclenche la variation de la fréquence f et de la pression p est Usa HO (Usa HO > Usa H);
- dans le deuxième cas, on observe une diminution du facteur TL, ce qui est l'indice d'une amélioration des conditions d'usinage. On attend que TL soit ≤ TLB. On déclenche alors une augmentation de régime en augmentant f progressivement, par paliers; cette procédure est maintenue jusqu'à ce que f ait retrouvé la valeur F initiale. Cette stratégie de protection peut évidemment se combiner à une stratégie décrite dans la demande de brevet suisse 98/89 pour découper un arc ou un angle. C'est le régime minimum (la fréquence minimum) qui sera pris en compte.

Exemple 3 - ATTAQUE DE PIECE

On surveille toujours simultanément TL et Usai.

On part d'une valeur de Usai > Usa HO, indice que le fil est hors de la pièce, et on usine à un régime minimum : f = F/4 et p = P/4.

Dès que le fil entre dans la pièce, Usai diminue rapidement. Lorsque sa valeur atteint une zone encadrant la valeur de référence Usa N, un signal est émis afin de commander une première augmentation de fréquence et de pression.

On attend la fin du premier palier pour procéder à l'augmentation de régime suivante, et ainsi de suite jusqu'à ce que f = F et p = P, pour autant que Usai reste dans cette zone, et que TL reste inférieur à TLM.

Les exemples ci-dessus avaient trait à des protections mises en oeuvre pour réagir à une dégradation de l'usinage qui ne fait pas forcément intervenir un risque de courts-circuits. D'autres types de protection permettent de répondre à l'apparition de ce risque de courts-circuits.

Exemple 4 - CONTROLE A L'APPROCHE D'UN COURT-CIRCUIT

Ce risque est détecté par l'observation d'une diminution de Usai en dessous du seuil critique Usa B. Le fil peut tendre vers le court-circuit dans plusieurs cas :
- soit à l'attaque d'une pièce car la vitesse est trop rapide,
- soit parce que le fil est poussé vers "l'avant" par la pression.

Ceci peut se produire lorsque le fil débouche dans une cavité, transversale; le liquide d'usinage s'engouffre alors dans la cavité, entraînant le fil. Ce phénomène est très rapide et conduit au court-circuit franc et définitif.

Dans le premier cas le régime minimum est en cours (voir exemple 2).

Par contre dans le deuxième cas la réaction consiste à diminuer la fréquence f et la pression d'injection p. Les réductions se poursuivent par paliers tant que Usa < Usa B .

**Revendications**

1. Dispositif pour machine de découpage par électroérosion avec un fil-électrode (1) et comportant un générateur (30) connecté entre les deux électrodes (1,2) et émettant des impulsions de tension, une commande numérique (9,14,16,18,19) commandant les déplacements relatifs entre la pièce (2) et les guides-fil (3,4), les caractéristiques des impulsions émises par le générateur (30) et la pression d'injection du liquide d'usinage dans la fente d'usinage, un circuit de mesure (21) suivant ou déterminant en continu les fluctuations d'au moins un premier facteur dont l'évolution au-delà d'un seuil ou d'une zone critique de référence est l'indice d'une dégradation des conditions d'usinage, ou du risque de rupture du fil-électrode, ainsi qu' un circuit (22) relié au précédent et destiné à comparer en continu ce premier facteur à un seuil ou à une zone critique de référence et à émettre vers la commande numérique (9) un signal d'erreur commandant la variation d'au moins un paramètre d'usinage, ce dispositif comportant de plus les moyens suivants associés au circuit (22) et à la commande (9) et agencés pour effectuer ces variations du paramètre, ou son retour à sa valeur initiale selon l'évolution du premier facteur au-delà ou en-deçà du seuil ou de la zone critique, par paliers dont la durée est asservie aux fluctuations d'un facteur témoin donnant une image des conditions régnant dans la fente d'étincelage, cette variation étant conduite au plus jusqu'à une valeur finale V' prédéterminée:
   - un élément (17) de support d'information, mémorisant le nombre de paliers et/ou la valeur finale V' et/ou les valeurs de chaque variation élémentaire,
   - un deuxième circuit de mesure complétant le circuit (22) et suivant ou déterminant les fluctuations du facteur témoin pendant les variations par paliers du paramètre,
   - un élément (15) de commande numérique agencé pour recevoir du circuit (22) un signal déclenchant les procédures de variation par paliers du paramètre, pour actionner en réponse ces variations élémentaires, et pour les arrêter à réception d'un signal indiquant que le paramètre atteint sa valeur finale V' ou est revenu à sa valeur initiale V ou qu'un nombre prédéterminé de paliers a été effectué ou que le premier facteur est repassé en-deçà du seuil ou de la zone critique.

2. Dispositif selon la revendication 1, agencé pour effectuer la variation par paliers de la fréquence des impulsions de tension émises par le générateur (30) et de la pression d'injection du liquide d'usinage dans la fente d'étincelage.

3. Dispositif selon la revendication 1, dans lequel les variations élémentaires du paramètre, mémorisées par l'élément (17), sont de valeur constante.

**4.** Dispositif selon la revendication 1, dans lequel le circuit (21) comporte un organe de mesure de la tension d'usinage Um régnant entre la pièce (2) à usiner et le fil-électrode (1).

**5.** Dispositif selon la revendication 4, dans lequel le circuit (22) comporte les moyens de déterminer une valeur moyenne $\overline{Um}$ de cette tension d'usinage, d'en déduire la différence Usa avec une tension moyenne d'usinage de référence $\overline{Umr}$, d'intégrer la valeur de Usa sur les valeurs obtenues pendant une durée déterminée et de comparer la valeur Usai ainsi obtenue à un seuil de référence.

**6.** Dispositif selon la revendication 1, dans lequel l'élément (17) présente une unité de calcul destinée à déterminer un taux moyen d' étincelles sans attente TL.

**7.** Procédé de contrôle d'une machine à découper par électroérosion avec un fil-électrode (1) et selon une trajectoire prédéterminée, dans lequel
- on détermine en continu la valeur d'au moins un premier facteur approprié dont l'évolution au-delà d'un seuil critique ou hors d'une zone critique de référence est l'indice d'une dégradation des conditions d'usinage ou d'un risque de rupture du fil, et,
- lorsque la valeur de ce premier facteur atteint ce seuil ou l'une des limites de cette zone critique, on commande la variation de la valeur V d'au moins un paramètre d'usinage d'une quantité élémentaire Q prédéterminée, cette variation pouvant améliorer les conditions d'usinage et donc faire évoluer un facteur témoin;
- lorsque la valeur de ce facteur témoin a évolué, nouvelle variation élémentaire du paramètre, ce mode de variation étant ainsi poursuivi par paliers jusqu'à ce que ce paramètre ait atteint la valeur finale désirée V' ou qu'un nombre prédéterminé de paliers aient été effectués, ou que le facteur ait repassé en-deçà du seuil ou de la zone critique,
- lorsque, soit au cours d'une procédure de variation du paramètre, soit après avoir usiné pendant un certain temps au régime correspondant à la valeur finale V', le premier facteur a repassé en deçà du seuil ou de la zone critique, variation en sens inverse du paramètre par paliers successifs, cette variation étant poursuivie jusqu'à ce qu'il ait repris sa valeur V initiale ou que le premier facteur ait évolué à nouveau au-delà du seuil ou hors de la zone critique, ce qui permet de faire varier un paramètre d'usinage jusqu'à une valeur finale prédéterminée ou jusqu'à une valeur intermédiaire correspondant à des conditions d'usinage satisfaisantes, puis de le ramener à sa valeur initiale.

**8.** Procédé selon la revendication 7, dans lequel les incréments et les décréments appliqués au paramètre sont tous égaux.

**9.** Procédé selon la revendication 7, dans lequel on détermine en continu une moyenne Usai de la différence entre la tension d'usinage réelle et une tension d'usinage moyenne de référence et on compare la valeur de Usai à un seuil critique prédéterminé.

**10.** Procédé selon la revendication 9, dans lequel on asservit la durée des paliers de variation d'au moins un paramètre sur l'évolution de Usai après chaque modification des conditions d'usinage consécutive à une variation de ce paramètre.

**11.** Procédé selon la revendication 7, dans lequel on détermine en continu un taux moyen TL d'étincelles sans attente.

**12.** Procédé selon la revendication 11, dans lequel on asservit la durée des paliers de variation d'au moins un paramètre sur l'évolution de TL après chaque modification des conditions d'usinage consécutive à une variation de ce paramètre.

## Claims

**1.** Device for EDM cutting machine with a wire-electrode (1), including a generator (30) connected between the two electrodes (1,2) and emitting voltage pulses, a numerical unit (9,14,16,18,19) for controlling the relative movements between the workpiece (2) and the wire guides (3,4), the characteristics of the pulses emitted by the generator (30) and the pressure of injection of the machining fluid into the machining slot, a measuring circuit (21) for continuously following or determining the variation of at least a first factor, the evolution of which beyond a critical reference threshold or zone is the indication of the downgrading of the machining conditions or of a risk of wire breakage and a circuit (22), connected to the first cicuit (21), for continuously comparing the first factor to the reference threshold or zone and for sending toward the numerical control element (9) an error signal to produce a variation of at least one machining parameter, which device comprises following further means, which are joined up with the circuit (22) and the numerical control element (9), for varying the machining parameter or for returning it to its initial value according to the evolution of the first factor above and below the reference threshold or zone, these variations being conducted by steps with durations of each step slaved to the fluctuation of a pilot factor providing an indication about the machining conditions into the machining slot, this varying being conducted at most up to a final scheduled value V':

- a data medium element (17), memorizing the number of steps, and/or the final scheduled value V, and/ or the value of each elementary variation,
- a second measuring circuit, set on the circuit (22), for following or determining the fluctuations of the pilot factor during the stepwise variations of the parameter,
- a numerical control element (15) for receiving from the circuit (22) a signal starting the stepped variations of the parameter, for providing in response these elementary variations, and for stopping them when receiving a signal indicating that the parameter has reached its final value V' or has returned to its initial value V, or that a predetermined number of variation steps have been performed, or that the first factor has returned across the reference threshold or zone.

2. Device, according to claim 1, equipped for controlling the stepped variations of the frequency of the voltage pulses emitted by the generator (30) and of the pressure of injection of the machining fluid into the sparking slot.

3. Device, according to claim 1, wherein the elementary variations of the parameter, memorized by the element (17), have a constant value.

4. Device, according to claim 1, in which the circuit (21) is equipped with means for measuring the machining voltage Um existing between the workpiece (2) and the wire-electrode (1).

5. Device, according to claim 4, in which the circuit (22) is equipped with means for determining a mean value $\overline{Um}$ of this machining voltage, for calculating the difference voltage Usa between this mean value and a mean reference machining voltage $\overline{Umr}$, for integrating the value of Usa obtained over a given period, and means for comparing the integrated value Usai with a reference threshold.

6. Device, according to claim 1, in which the circuit (21) is equipped with a computing unit for determining a mean rate TL of sparks igniting without delay time.

7. Control process for an EDM cutting machine with a wire-electrode (1) along a predetermined trajectory, in which

- the value of at least one appropriate first factor is continuously determined, the evolution of this factor beyond a critical reference threshold or out of a critical reference zone indicating a downgrading of the machining conditions or a risk of wire breakage, and
- when the value of this first factor goes across this critical threshold or zone, the value V of at least one machining parameter is made to vary by a predetermined elementary quantity Q, that variation being able to improve the machining conditions and thus making a pilot factor to fluctuate;
- as soon as said pilot factor has stopped its fluctuations, further variation of the parameter by an elementary quantity, this stepwise method of variation being continued until the parameter has reached the final scheduled value V' or until a predetermined number of steps has been performed, or until the first factor has returned on this side, across the critical threshold or zone,
- when, either during a variation of the parameter, or after having machined for a given period of time at a rate corresponding to the final value V', the first factor returns on this side by crossing the critical threshold or zone, starting a stepwise variation of the parameter in the opposite direction, this variation being continued until it has reached its initial value V, or until the first factor crosses again the critical threshold or zone, allowing thus to vary a machining parameter up to a final scheduled value or up to an intermediate value corresponding to satisfying machining conditions, and then to return it to its initial value.

8. Process, according to claim 7, in which the increments and decrements applied to the parameter are all equal.

9. Process, according to claim 7, in which a mean value Usai of the difference between the actual machining voltage and a mean reference machining voltage is continuously determined, and the value Usai is compared to a predetermined critical threshold.

10. Process, according to claim 9, in which the duration of the variation steps of at least one parameter is slaved to changes of Usai after each modification of the machining conditions consecutive to a variation of this parameter.

11. Process, according to claim 7, in which a mean rate TL of sparks igniting without delay is continuously determined.

12. Process, according to claim 11, in which the duration of the variation steps of at least one parameter is slaved to changes of TL after each modification of machining conditions consecutive to a variation of this parameter.

**Patentansprüche**

1. Vorrichtung für eine Maschine zum elektroerosiven Schneiden mit einer Drahtelektrode (1), die einen, zwischen die beiden Elektroden (1,2) geschalteten und Spannungsimpulsen abgebenden Generator (30) aufweist, sowie eine numerische Steuerung (9,14,16,18,19) der Relativbewegungen zwischen dem Werkstück (2) und den Drahtführungen (3,4) und der Eigenschaften der durch den Generator (30) abgegebenen Impulse und der Einspritzdruck der Arbeitsflüssigkeit in den Arbeitspalt, sowie einen Messkreis (21) zum kontinuierlichen Überwachung oder Bestimmung von den Schwankungen mindestens eines ersten Faktors, dessen Entwicklung über einen kritischen Bezugsgebiet oder eine kritische Bezugsschwelle hinaus das Anzeichen für eine Verschlechterung der Arbeitsbedingungen oder für eine Bruchgefahr der Drahtelektrode (1) ist, sowie einen, an den Messkreiss (21) angeschalteten Schaltkreis (22) zum kontinuierlichen Vergleichen diesen ersten Faktor mit einem kritischen Bezugsgebiet oder mit einer kritischen Bezugsschwelle und zum Absenden nach dem numerischen Steuerelement (9) eines, die Veränderung mindestens eines Arbeitsparameters auslösenden Irrtumssignals, wobei diese Vorrichtung noch folgende, mit dem Schaltkreis (22) und dem Steuerelement (9) verbundene Mitteln aufweist, zur Durchführung dieser Änderungen des Parameters oder seines Rückkehrs an seinen Anfangswert V gemäss der Entwicklung des ersten Faktors diesseits oder jenseits des kritischen Bezugsgebiets oder der kritischen Bezugsschwelle hinaus, in Stufen deren Dauer durch die Schwänkungen eines kennzeichnenden, ein Bild der im Arbeitsspalt herrschenden Zustände liefernden Faktors gesteuert wird, wobei diese Veränderung höchstens bis zu einem vorbestimmten Endwert V' durchgeführt wird:
   - ein informationstragende Element (17), das die Zahl der Stufen und/oder den Endwert V' und/oder die Grösse jeder elementaren Änderung speichert,
   - einen zweiten, mit dem Schaltkreis (22) verbundenen Messkreis, der die Schwänkungen des kennzeichnenden Faktors während der stufenweise Änderungen des Parameters folgt oder bestimmt,
   - einen numerischen Steuerglied (15) zur Empfang eines, die stufenweise Änderungen des Parameters bewirkenden, vom Schaltkreis (22) gesandten Signals, zur Anregung dieser elementaren Änderungen des Parameters und zum deren Anhalten nach Empfang eines Signals, das entweder anzeigt, dass das Parameter seinen Endwert V' erreicht hat oder auf seinem ursprünglichen Wert V zurückgelangt ist, oder dass eine vorbestimmte Anzahl Stufen durchgeführt worden sind oder dass der erste Faktor wieder diesseits des kritischen Bezugsgebiets oder der kritischen Bezugsschwelle zurückgekehrt ist.

2. Vorrichtung nach Anspruch 1, die zur stufenweise Änderung der Frequenz der durch den Generator (30) abgegebenen Spannungsimpulsen und des Einspritzdrucks der Arbeitsflüssigkeit in den Elektroerosionsspalt ausgebildet ist.

3. Vorrichtung nach Anspruch 1, in welcher die durch das informationstragenden Element (17) gespeicherten, elementaren Änderungen des Parameters, einen konstanten Wert aufweisen.

**4.** Vorrichtung nach Anspruch 1, in welcher der Messkreis (21) ein Organ aufweist, das zur Messung der zwischen dem Werkstück (2) und der Drahtelektrode (1) herrschenden Arbeitsspannung Um vorgesehen ist.

**5.** Vorrichtung nach Anspruch 4, in welcher der Schaltkreis (22) Mittel zur Bestimmung eines Mittelwertes $\overline{\text{Um}}$ dieser Arbeitsspannung, zum davon Abrechnen der Differenz Usa zu einer mittleren Referenzspannung $\overline{\text{Umr}}$, sowie zum Integrieren des Wertes von Usa auf einer bestimmten Dauer und zum Vergleichen des so erhaltenen Werts Usai mit einem Bezugsschwellenwert, umfasst.

**6.** Vorrichtung nach Anspruch 1, in welcher der Messkreis (21) eine Rechnereinheit aufweist, die zur Bestimmung einer mittleren Rate TL der Funken ohne Verzögerung vorgesehen ist.

**7.** Verfahren zum Steuern einer Maschine zum elektroerosiven Schneiden mit einer Drahtelektrode (1) längs einer vorbestimmten Bahn, gekennzeichnet durch folgende Schritte:
   - den Wert mindestens eines ersten Faktors, dessen Entwicklung über einen kritischen Bezugsgebiet oder eine kritische Bezugsschwelle hinaus das Anzeichen für eine Verschlechterung der Arbeitsbedingungen oder für eine Bruchgefahr des Drahtes ist, wird kontinuierlich bestimmt,
   - wenn der Wert dieses ersten Faktors diese kritische Schwelle oder eine der Grenzen des kritischen Gebiet erreicht, Anregung einer Änderung des Wertes V mindestens eines Arbeitsparameters um eine vorbestimmte Grösse Q, wobei diese Änderung die Arbeitsbedingungen verbessert und somit einen kennzeichnenden Faktor verändert,
   - wenn der Wert dieses kennzeichnenden Faktor sich verändert hat, erneute elementare Änderung des Parameters, wobei diese Veränderungsart stufenweise fortgesetzt wird, bis der Parameter seine gewünschte Endwert V' erreicht hat oder bis eine vorbestimmte Zahl von Stufenweisen Änderungen vorgenommen worden sind, oder bis der erste Faktor wieder diesseits der kritischen Schwelle oder des kritischen Gebiets zurückgekehrt ist,
   - wenn der erste Faktor, entweder während einer Änderungsphase des Parameters oder nach einer Verarbeitung während einer bestimmten Zeit, unter dem Endwert V' entsprechenden Arbeitsbedingungen, wieder diesseits der kritischen Schwelle oder des kritischen Gebiets zurückgekehrt ist, stufenweise Änderung des Parameters in der umgekehrten Richtung, bis der Parameter auf seinem ursprünglichen Wert V zurückgelangt ist, oder bis der erste Faktor erneut, wieder jensseits des kritischen Gebiets oder der kritischen Schwelle zurückgekehrt ist, was erlaubt einen Arbeitsparameter bis zu einem vorbestimmten Endwert oder bis zu einem, an befriedigenden Arbeitsbedingungen entsprechenden Zwischenwert zu verändern, und auf seinem ursprünglichen Wert zurückzuführen.

**8.** Verfahren nach Anspruch 7, in welchem die an einem Parameter angewandeten Inkremente und Dekremente alle gleich sind.

**9.** Verfahren nach Anspruch 7, in welchem einer Mittelwert Usai der Differenz zwischen der realen Arbeitsspannung und einer mittleren Referenzspannung kontinuierlich bestimmt, und dieser Mittelwert mit einem vorbestimmten Bezugsschwellenwert verglichen wird.

**10.** Verfahren nach Anspruch 9, in welchem die Dauer der Änderungsstufen von mindestens einem Parameter auf der Entwicklung von Usai, die jede, durch eine Parameteränderung hervorgerufene Änderung der Arbeitsbedingungen folgt, geregelt wird.

**11.** Verfahren nach Anspruch 7, in welchem einen mittleren Rate TL der Funken ohne Verzögerung kontinuierlich bestimmt wird.

**12.** Verfahren nach Anspruch 11, in welchem die Dauer der Änderungsstufen von mindestens einem Parameter auf der Entwicklung von TL, die jede, durch eine Parameteränderung hervorgerufene Änderung der Arbeitsbedingungen folgt, geregelt wird.

FIG.I

**FIG.2**